# EUROPEAN PATENT SPECIFICATION

(11) **EP 3 263 917 B1**
(45) Date of publication and mention of the grant of the patent: **22.04.2020**
(21) Application number: 16177064.9
(22) Date of filing: 30.06.2016
(51) Int. Cl.: F16B 4/00, F16B 19/02, F16B 37/12

(54) **PULL-OUT PIN**
AUSZUGSSTIFT
BROCHE D'EXTRACTION

(43) Date of publication of application: 03.01.2018
(73) Proprietor: Fareast Metal International Co., Ltd., Taipei City 71750 (TW)
(72) Inventor: WU, Chung-Huei, Tainan City 71742 (TW)
(74) Representative: Delorme, Nicolas

(56) References cited:
- EP-A1- 1 548 297
- CN-A- 102 305 229
- DE-A1-102012 219 089
- DE-C- 959 337
- US-A- 2 056 309

## Description

The disclosure relates to a pin, more particularly to a pull-out pin that is adapted to be removably inserted into two objects and couple the objects to each other.

A pin is a component commonly used in the industrial field, and has different structures and sizes according to different requirements. A pull-out pin is used for coupling at least two objects together with each of the objects having a pin hole for insertion of the pull-out pin thereinto. The objects may be mold bases or machine parts that need to be fixed at specific relative positions. For example, the pull-out pin may be used for installing an engine in a vehicle. The pull-out pin has a diameter slightly larger than that of the pin holes of the objects, and is formed with an operating hole extending along a central axis thereof. In use, a user needs to register the pin holes of the objects with each other, then tightly insert the pull-out pin into the registered pin holes for coupling the objects to each other. When separating the objects from each other, the user needs to insert a tool into the operating hole and turn the tool to remove the pull-out pin from the objects.

For example, DE 959 337 discloses a bushing for insertion under a press fit into a hole.

However, when the pin hole of one of the objects is ablindhole, air inside the blind pin hole maybe hindered from flowing out during insertion of the pull-out pin thereinto since the pull-out pin fully obstructs the pin holes, and the air left between the pull-out pin and the blind pin hole may cause difficulty in installation of the pull-out pin. To solve this problem, the pull-out pin can be modified to be formed with a vent passage that permits the air to flow out therethrough. However, the objects coupled by the pull-out pin usually have adhesive substances accumulated inside the pin holes, such as grease. Thus, when the vent passage is consequently blocked by the grease, airflow through the vent passage will also be blocked.

Therefore, an object of the disclosure is to provide a pull-out pin that can alleviate the drawback associated with the prior art.

According to the invention, a pull-out pin as defined by claim 1 is provided and adapted to couple first and second objects to each other. Each of the first and second objects is formed with a pinhole. The pull-out pin is adapted to be removably and tightly inserted through the pin hole of the first object and into the pin hole of the second object. The pull-out pin includes a first end surface, a second end surface spaced apart from the first end surface, and an outer surrounding surface connected between the first and the second end surfaces and surrounding a central axis. The outer surrounding surface has a recessed surface portion that defines a vent groove extending from the first end surface in a direction toward the second end surface, and a helical groove that extends helically about the central axis from the first end surface toward the second end surface, and that intersects the vent groove.

Other features and advantages of the disclosure will become apparent in the following detailed description of the embodiment with reference to the accompanying drawings, of which:
Figure 1 is a perspective view of a first embodiment of a pull-out pin according to the disclosure;
Figure 2 is a top view of the first embodiment inserted into a first object and a second object;
Figure 3 is a sectional view of the first embodiment and the first and second objects taken along line 3-3 in Figure 2;
Figure 4 is a fragmentary side view of the first embodiment;
Figure 5 is a perspective view of a second embodiment of the pull-out pin according to the disclosure; and
Figure 6 is a sectional view of the second embodiment inserted into two objects.

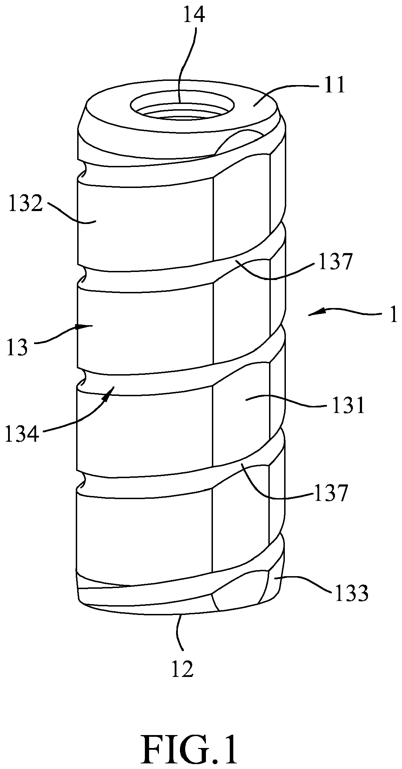

Referring to Figures 1 to 4, a first embodiment of a pull-out pin 1 according to the present disclosure is adapted to couple together a first object 21 and a second object 22. The first object 21 has a first hole-defining surface 212 defining a first pin hole 211. The second object 22 has a second hole-defining surface 222 defining a second pin hole 221. The first pin hole 211 is a through hole, while the second pin hole 221 is a blind hole.

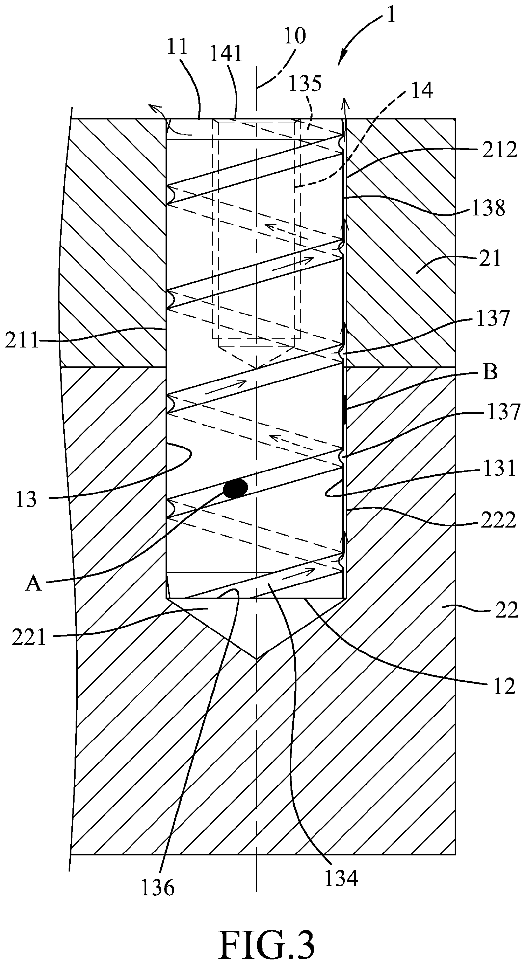

The pull-out pin 1 has a cylindrical shape, and has a central axis 10 (see Figure 3). The pull-out pin 1 has a first end surface 11, a second end surface 12 spaced apart from the first end surface 11 along the central axis 10, and an outer surrounding surface 13 connected between the first end surface 11 and the second end surface 12, and surrounding the central axis 10. The pull-out pin 1 has a diameter slightly larger than that of the first and the second pin holes 211, 221, so that the pull-out pin 1 can be tightly inserted through the first pin hole 211 into the second pin hole 221. The first end surface 11 is adapted to be disposed in the first pin hole 211 of the first object 21, and the second end surface is adapted to be disposed in the second pin hole 221 of the second object 22. After the pull-out pin 1 is inserted through the first pin hole 211 into the second pin hole 221, the first end surface 11 is flush with an end surface that is formed with the first pin hole 211. The pull-out pin 1 further has an operating hole 14 extending from the first end surface 11 along the central axis 10, and having an open end 141 formed at the first end surface 11.

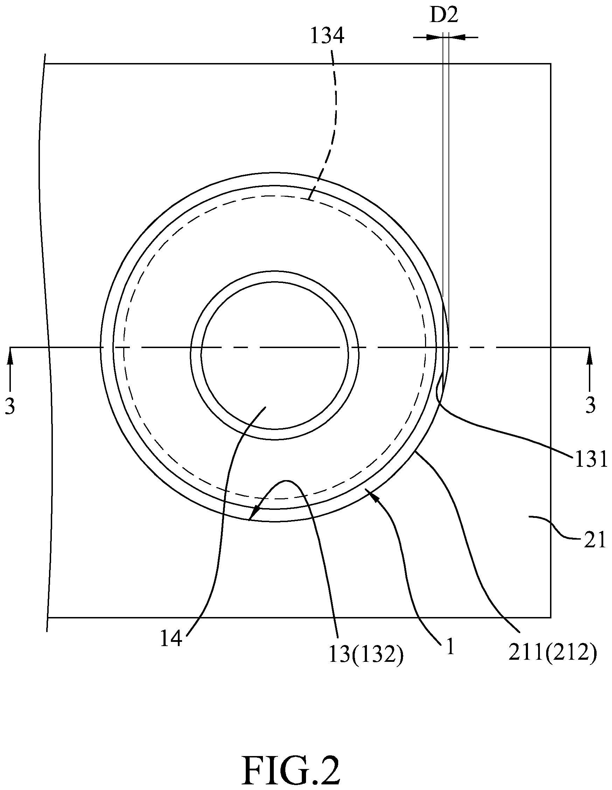

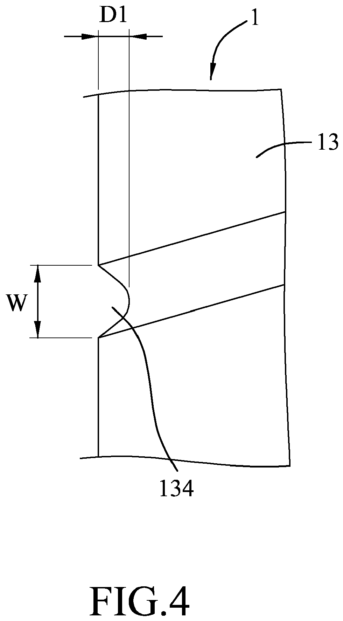

In this embodiment, the outer surrounding surface 13 of the pull-out pin 1 has a recessed surface portion 131, a connecting surface portion 132, a frustoconical surface portion 133 and a helical groove 134. The recessed surface portion 131 defines a vent groove extending from the first end surface 11 in a direction toward the second end surface 12. The connecting surface portion 132 extends from the first end surface 11 toward the second end surface 12, and is connected to opposite lateral sides of the recessed surface portion 131. The frustoconical surface portion 133 is disposed between the connecting surface portion 132 and the second end surface 12, and is connected to opposite lateral sides of the recessed surface portion 131. The frustoconcical surface portion 131 gradually converges toward the second end surface 12. The helical groove 134 extends helically about the central axis 10 from the first end surface 11 toward the second end surface 12, and intersects the vent groove. The helical groove has a first groove opening 135 formed at the first end surface 11, a second groove opening 136 formed at the second end surface 12, and a plurality of shallow groove portions 137 disposed between the first groove opening 135 and the second groove opening 136, and intersecting the vent groove. The helical groove 134 has a maximum depth (D1) (see Figure 4) larger than a maximum depth (D2) (see Figure 2) of the vent groove. The maximum depth (D2) is a maximum distance between the recessed surface portion 131 of the outer surrounding surface 13 and the first and second hole-defining surfaces 212, 222. In this embodiment, the maximum depth (D1) is 0.5 millimeters, and a width (W) (see Figure 4) of the helical groove 134 is 1.0 millimeter. The maximum depth (D2) of the vent groove is 0.13±0.02 millimeters.

When the pull-out pin 1 is tightly inserted in the first and the second pin holes 211, 221, the recessed surface portion 131 cooperates with the first and the second inner surfaces 212, 222 to define a vent passage 138 (see Figure 3) that communicates with the helical groove 134.

In this embodiment, when inserting the pull-out pin 1 into the first and the second pin holes 211, 221, air inside the first and the second pin holes 211, 221 can be expelled through the helical channel 134 and the vent passage 138 without interfering with the insertion of the pull-out pin 1.

However, if any one of the helical groove 134 and the vent passage 138 is blocked by grease, the air inside the first and the second pin holes 211, 221 can still be expelled through the other one of the helical groove 134 and the vent passage 138. Therefore, the structural design of the helical groove 134 and the vent passage 138 ensures that the air in the first and second pin holes 211, 221 can be expelled out of the first and second pin holes 211, 221, and that the pull-out pin 1 can be smoothly inserted into the first and second pin holes 211, 221.

Specifically, referring to Figure 3, when the helical groove 134 is blocked by grease at a blocked point (A) which is proximate to the second end surface 12, the air in the second pin hole 221 can flow along the vent passage 138 to bypass the blocked point (A), and can flow back to the helical groove 134 via any one of the shallow groove portions 137 downstream of the blocked point (A). If another blocked point (B) occurs in the vent passage 138, the air can flow along the helical groove 134 to bypass the blocked point (B), and can flow back to the vent passage 138 via any one of the shallow groove portions 137 downstream of the blocked point (B) .

Therefore, by virtue of the intersections (i.e., the shallow groove portions 137) of the helical groove 134 and the vent groove defined by the recessed surface portion 131 of the outer surrounding surface 13, when the helical groove 134 and the vent passage 138 are blocked by multiple blocked points (A, B), the air can change route via the shallow groove portions 137 to flow out of the first and second pin holes 211, 221.

When removing the pull-out pin 1 from the first and second objects 21, 22, a user need only insert a tool (not shown) into the operating hole 14 from the open end 141 and rotate the tool to drive rotation of the pull-out pin 1 about the central axis 10, and at the same time, pull the pull-out pin 1 out of the first and second pin holes 211, 221.

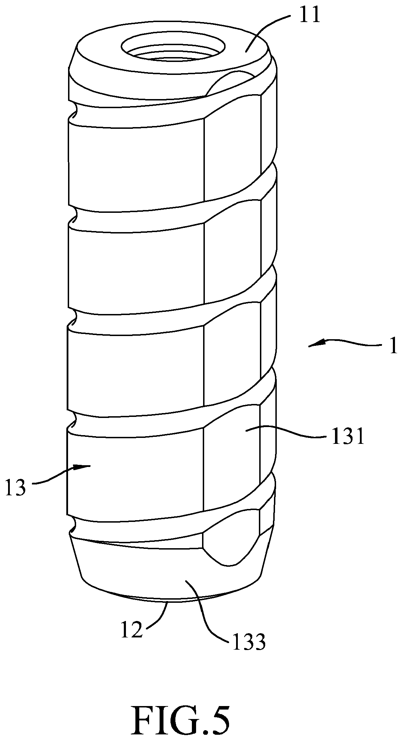

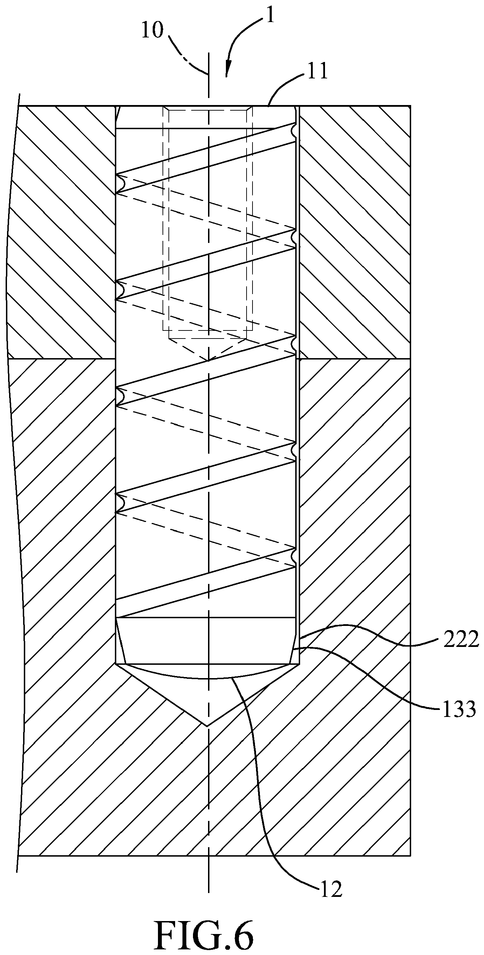

As shown in Figures 5 and 6, the second embodiment of the pull-out pin 1 has a structure similar to that of the first embodiment, except that the second end surface 12 has a curved surface protruding away from the first end surface 11. Moreover, the frustoconical surface portion 133 of the outer surrounding surface 13 has a width along the central axis 10 and a slope larger than those of the frustoconical surface portion 133 illustrated in the first embodiment. In this embodiment, the recessed surface portion 131 extends from the first end surface 11 to the frustoconical surface portion 133 instead of the second end surface 12, so that the air inside the second pin hole 221 can still flow into the vent passage 138 via the gap between the frustoconical surface portion 133.

## Claims

1. A pull-out pin (1) adapted to couple first and second objects (21, 22) to each other, each of the first and second objects (21, 22) being formed with a pin hole (211, 221), said pull-out pin (1) being adapted to be removably and tightly inserted through the pin hole (211) of the first object and into the pin hole (221) of the second object (22), said pull-out pin (1) including a first end surface (11), and a second end surface (12) spaced apart from said first end surface (11), **characterized in that** said pull-out pin (1) further includes:
an outer surrounding surface (13) connected between said first and said second end surfaces (11, 12), surrounding a central axis (10), and having
a recessed surface portion (131) that defines a vent groove extending from said first end surface (11) in a direction toward said second end surface (12), and
a helical groove (134) that extends helically about the central axis (10) from said first end surface (11) toward said second end surface (12), and that intersects said vent groove,
said helical groove (134) has a first groove opening (135) formed at said first end surface (11), a second groove opening (136) formed at said second end surface (12), and a plurality of shallow groove portions (137) disposed between said first groove opening (135) and said second groove opening (136) and intersecting said vent groove,
said helical groove (134) has a maximum depth (D1) larger than a maximum depth (D2) of said vent groove,
the maximum depth (D2) of said vent groove is 0.13±0.02 millimeters;
the maximum depth (D1) of said helical groove (134) is 0.5 millimeters;
a width (W) of said helical groove (134) is 1.0 millimeter,
said first end surface (11) is adapted to be disposed in the pin hole (211) of the first object (21);
said second end surface (12) is adapted to be disposed in the pin hole (221) of the second object (22);
said outer surrounding surface (13) further has
a connecting surface portion (132) extending from said first end surface (11) toward said second end surface (12), and connected to opposite lateral sides of said recessed surface portion (131), and
a frustoconical surface portion (133) disposed between said connecting surface portion (132) and said second end surface (12), connected to said recessed surface portion (131), and gradually converging toward said second end surface (12), and
said pull-out pin (1) further includes an operating hole (14) that extends from said first end surface (11) along the central axis (10).

## Patentansprüche

1. Auszugsstift (1), der angepasst ist, um erste und zweite Gegenstände (21, 22) aneinander zu koppeln, wobei jeder von dem ersten und zweiten Gegenstand (21, 22) mit einem Stiftloch (211, 221) gebildet ist, wobei der Auszugsstift (1) angepasst ist, um abnehmbar und fest durch das Stiftloch (211) des ersten Gegenstands und in das Stiftloch (221) des zweiten Gegenstands (22) hindurch eingeführt zu werden, wobei der Auszugsstift (1) eine erste Stirnoberfläche (11) und eine zweite Stirnoberfläche (12) beinhaltet, die von der ersten Stirnoberfläche (11) beabstandet ist, **dadurch gekennzeichnet, dass** der Auszugsstift (1) weiter Folgendes beinhaltet:
eine umgebende Außenoberfläche (13), die zwischen der ersten und zweiten Stirnoberfläche (11, 12) verbunden ist, eine Mittenachse (10) umgebend, und Folgendes aufweisend
einen ausgesparten Oberflächenabschnitt (131), der eine Entlüftungsnut definiert, die sich von der ersten Stirnoberfläche (11) in einer Richtung zu der zweiten Stirnoberfläche (12) erstreckt, und
eine schraubenförmige Nut (134), die sich schraubenförmig um die Mittenachse (10) herum, von der ersten Stirnoberfläche (11) zu der zweiten Stirnoberfläche (12) erstreckt, und die die Entlüftungsnut schneidet,
wobei die schraubenförmige Nut (134) eine erste Nutöffnung (135) aufweist, die an der ersten Stirnoberfläche (11) gebildet ist, eine zweite Nutöffnung (136), die an der zweiten Stirnoberfläche (12) gebildet ist, und eine Vielzahl von flachen Nutabschnitten (137), die zwischen der ersten Nutöffnung (135) und der zweiten Nutöffnung (136) angeordnet sind, und die Entlüftungsnut schneiden,
die schraubenförmige Nut (134) eine maximale Tiefe (D1) größer als eine maximale Tiefe (D2) der Entlüftungsnut aufweist,
die maximale Tiefe (D2) der Entlüftungsnut 0,13±0,02 Millimeter ist;
die maximale Tiefe (D1) der schraubenförmigen Nut (134) 0,5 Millimeter ist;
eine Breite (W) der schraubenförmigen Nut (134) 1,0 Millimeter ist,
die erste Stirnoberfläche (11) angepasst ist, um in dem Stiftloch (211) des ersten Gegenstands (21) angeordnet zu werden;
die zweite Stirnoberfläche (12) angepasst ist, um in dem Stiftloch (221) des ersten Gegenstands (22) angeordnet zu werden;
wobei die umgebende Außenoberfläche (13) weiter Folgendes aufweist
einen verbindenden Oberflächenabschnitt (132), der sich von der ersten Stirnoberfläche (11) zu der zweiten Stirnoberfläche (12) erstreckt, und mit entgegengesetzten lateralen Seiten des ausgesparten Oberflächenabschnitts (131) verbunden ist, und
einen kegelstumpfförmigen Oberflächenabschnitt (133), der zwischen dem verbindenden Oberflächenabschnitt (132) und der zweiten Stirnoberfläche (12) angeordnet, mit dem ausgesparten Oberflächenabschnitt (131) verbunden ist; und schrittweise zu der zweiten Stirnoberfläche (12) konvergiert, und
der Auszugsstift (1) weiter ein Bedienungsloch (14) beinhaltet, das sich von der ersten Stirnoberfläche (11) entlang der Mittenachse (10) erstreckt.

## Revendications

1. Broche extractible (1) adaptée pour coupler des premier et deuxième objets (21, 22) l'un à l'autre, chacun des premier et deuxième objets (21, 22) étant formé avec un trou de broche (211, 221), ladite broche extractible (1) étant adaptée pour être insérée de manière amovible et serrée à travers le trou de broche (211) du premier objet et dans le trou de broche (221) du deuxième objet (22), ladite broche extractible (1) comportant une première surface d'extrémité (11) et une deuxième surface d'extrémité (12) espacée de ladite première surface d'extrémité (11), **caractérisée en ce que** ladite broche extractible (1) comporte en outre :
une surface environnante extérieure (13) reliée entre lesdites première et deuxième surfaces d'extrémité (11, 12), entourant un axe central (10), et ayant
une partie de surface en évidement (131) qui définit une rainure de ventilation s'étendant depuis ladite première surface d'extrémité (11) dans une direction vers ladite deuxième surface d'extrémité (12), et
une rainure hélicoïdale (134) qui s'étend de manière hélicoïdale autour de l'axe central (10) depuis ladite première surface d'extrémité (11) vers ladite deuxième surface d'extrémité (12) et qui coupe ladite rainure de ventilation,
ladite rainure hélicoïdale (134) a une première ouverture de rainure (135) formée au niveau de ladite première surface d'extrémité (11), une deuxième ouverture de rainure (136) formée au niveau de ladite deuxième surface d'extrémité (12), et une pluralité de parties de rainure peu profondes (137) disposées entre ladite première ouverture de rainure (135) et ladite deuxième ouverture de rainure (136) et coupant ladite rainure de ventilation,
ladite rainure hélicoïdale (134) a une profondeur maximale (D1) supérieure à une profondeur maximale (D2) de ladite rainure de ventilation,
la profondeur maximale (D2) de ladite rainure de ventilation est de 0,13 ± 0,02 millimètre ;
la profondeur maximale (D1) de ladite rainure hélicoïdale (134) est de 0,5 millimètre ;
une largeur (W) de ladite rainure hélicoïdale (134) est de 1,0 millimètre,
ladite première surface d'extrémité (11) est adaptée pour être disposée dans le trou de broche (211) du premier objet (21) ;
ladite deuxième surface d'extrémité (12) est adaptée pour être disposée dans le trou de broche (221) du deuxième objet (22) ;
ladite surface environnante extérieure (13) a en outre
une partie de surface de liaison (132) s'étendant depuis ladite première surface d'extrémité (11) vers ladite deuxième surface d'extrémité (12), et reliée aux côtés latéraux opposés de ladite partie de surface en évidement (131), et
une partie de surface tronconique (133) disposée entre ladite partie de surface de liaison (132) et ladite deuxième surface d'extrémité (12), reliée à ladite partie de surface en évidement (131), et convergeant progressivement vers ladite deuxième surface d'extrémité (12), et
ladite broche extractible (1) comporte en outre un trou de fonctionnement (14) qui s'étend depuis ladite première surface d'extrémité (11) le long de l'axe central (10).
